# EUROPEAN PATENT SPECIFICATION

(11) **EP 4 051 959 B1**
(45) Date of publication and mention of the grant of the patent: **02.12.2026**
(21) Application number: 20883480.4
(22) Date of filing: 12.10.2020
(51) Int. Cl.: F21V 21/03, H02G 3/20, H01R 13/629, H01R 13/64, H02G 3/16, F21V 23/06

(54) **QUICK CONNECT MOUNT FOR ELECTRICAL FIXTURE AND METHOD FOR CONNECTING A CEILING MOUNTED FIXTURE TO AN ELECTRICAL JUNCTION BOX**
SCHNELLVERBINDUNGSHALTERUNG FÜR ELEKTRISCHE VORRICHTUNG UND VERFAHREN ZUM VERBINDEN EINER DECKENMONTIERTEN VORRICHTUNG MIT EINEM STROMVERTEILERKASTEN
MONTURE À CONNEXION RAPIDE D'UN APPAREIL ÉLECTRIQUE ET PROCÉDÉ DE CONNEXION D'UN APPAREIL MONTÉ AU PLAFOND À UNE BOÎTE DE JONCTION ÉLECTRIQUE

(30) Priority: 30.10.2019 US 201916668108
(43) Date of publication of application: 07.09.2022
(73) Proprietor: Norris, Scott, Owensboro, KY 42301 (US)
(72) Inventor: Norris, Scott, Owensboro, KY 42301 (US)
(74) Representative: Forresters IP LLP
(86) International application number: PCT/US2020/055200
(87) International publication number: WO 2021/086587

(56) References cited:
- WO-A1-02/099932
- DE-A1- 102018 107 176
- US-A- 6 146 191
- US-A1- 2002 111 063
- US-A1- 2006 274 519
- US-B1- 6 780 049
- US-B2- 6 503 099
- US-B2- 6 634 901
- US-B2- 6 799 982
- US-B2- 6 997 740
- US-B2- 7 467 888

## Description

### Field of the Invention

The present invention relates to devices and methods for quickly and easily connecting electrical fixtures. More specifically, the present invention relates to a device and method for quickly and easily connecting overhead electrical fixtures such as lights or ceiling fans to a ceiling electrical box.

### Description of the Related Art

Attaching electrical ceiling fixtures, such as lights or fans, to an electrical junction box set into the ceiling is a difficult task for a single installer. To install the fixture, it is lifted to just below the electrical junction box, and is held there while connecting the fixture wires to the electrical supply wires. After the electrical connection is finished, the fixture is lifted further to align mounting holes in the fixture's mounting plate with mounting holes in the junction box. Screws or bolts are then threaded through the mounting holes to secure the fixture to the junction box. The combined operation takes several minutes and usually requires two persons, one to lift and hold the fixture and the other to make the wire and screw connections.

U.S. Pat. No. 6,503,099 teaches a quick connect device for hanging fans, lighting fixtures, and the like. A horizontal sliding connector is provided between the ceiling box and the electrical fixture. The sliding connector takes the weight of the fixture as it is inserted, which can be done by one person. The electrical connections are established by a plug-and-receptacle connector positioned to engage automatically as the sliding connector slides into place.

However, the quick connect device of U.S. Pat. No. 6,503,099 does not include mechanisms for connecting the plates of the mounting device directly to the pre-set mounting holes in the ceiling box and fixture. Accordingly, there is a need for a quick connect mount for an electrical fixture that can be directly mounted to the pre-set mounting holes in the junction box and fixture. There is also a need for a method for connecting a ceiling mounted fixture directly to a ceiling junction box by way of the pre-set mounting holes provided in both the junction box and fixture.

WO 02/099932 A1 discloses a ceiling fan or light fixture is provided with a sliding support member that slides horizontally into a support channel attached to ceiling box. An electrical plug and receptacle attached to the two support members automatically mate as the two support members are slid together. A bell is then raised to cover the two support members and prevent them from sliding apart.

US 6 146 191 A discloses a locking electrical connector assembly for locking together a plug and a header. The assembly includes a plug having a plug body, a first electrical contact located the plug body capable of receiving a wire, an opening in the plug body capable of receiving a second electrical contact from a header where the second electrical contact makes electrical connection to the first electrical contact, a first interlocking portion provided on a first side of the plug body for interlocking with a corresponding first interlocking portion of the header, and a second interlocking portion located on a second side opposite from the first side for interlocking with a corresponding second interlocking portion of the header. The header includes a first surface having the corresponding first interlocking portion for interlocking with the first interlocking portion of the plug, a second surface having the corresponding second interlocking portion for interlocking with the second interlocking portion of the plug, and a third surface integrated with the first and the second surfaces having an opening for housing the second electrical contact.

US 2002/111063 A1 discloses various forms of ceiling fan with easy install features. The fans include an electrical quick connect device. The quick connect device includes a plug/receptacle configuration enabling the fan to easily connect to an electricity supply while providing the gravitational and rotational support required by the fan.

### SUMMARY OF THE INVENTION

It is therefore an object of the present invention to provide a quick connect mount for an electrical fixture that can be directly mounted to pre-set mounting holes in the junction box and the fixture.

Features of the invention are set out in claim 1.

Preferred features of the invention are set out in the dependent claims.

### BRIEF DESCRIPTION OF THE DRAWINGS

The present invention can best be understood in connection with the accompanying drawings. It is noted that the invention is not limited to the precise embodiments shown in the drawings, in which:
FIG. 1 is a perspective view of a quick connect for an electrical fixture according to a presently preferred embodiment of the invention.
FIG. 2 is a plan view of the mating faces of the two plates of the quick connect for an electrical fixture shown in FIG. 1.
FIG. 3A is an end view of the junction box mounting plate of the quick connect for an electrical fixture shown in FIG. 1.
FIG. 3B is an end view of the fixture mounting plate of the quick connect for an electrical fixture shown in FIG. 1.
FIG. 4A is a front exploded perspective view of the quick connect for an electrical fixture shown in FIG. 1, shown in combination with a ceiling electrical junction box and light fixture.
FIG. 4B is a rear exploded perspective view of the quick connect for an electrical fixture shown in FIG. 1, shown in combination with a ceiling electrical junction box and light fixture.
FIG. 5 is a plan view of the mating faces of the two plates of the quick connect for an electrical fixture shown in FIG. 1 shown mounted on the junction box and fixture.

### DETAILED DESCRIPTION OF THE INVENTION

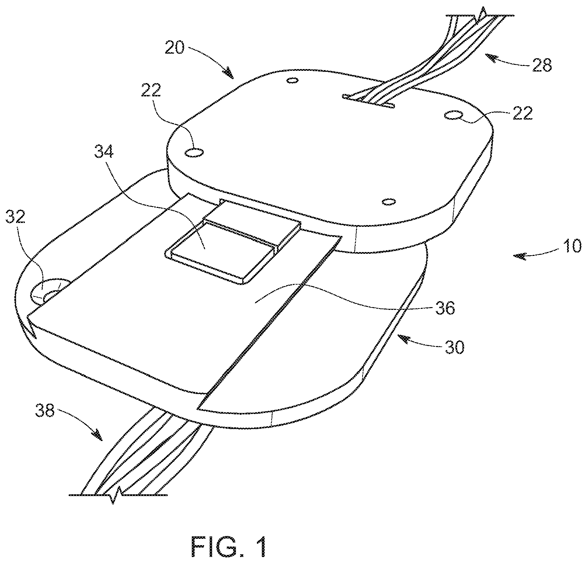

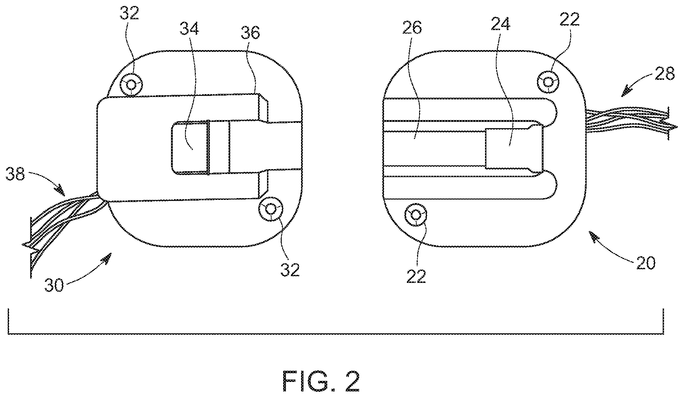

As best shown in FIG. 1-FIG. 5, one presently preferred embodiment of the invention comprises a quick connect mounting assembly 10 which includes a first junction box mounting plate 20 and a second fixture mounting plate 30. It is within the scope of the invention to flip the plates such that the first mounting plate 20 is connected to the fixture 50 and the second mounting plate 30 is connected to the junction box 40, but for purposes of the detailed description, the first mounting plate 20 will be described as being connected to the junction box 40 and the second mounting plate will be described as being attached to the fixture 50.

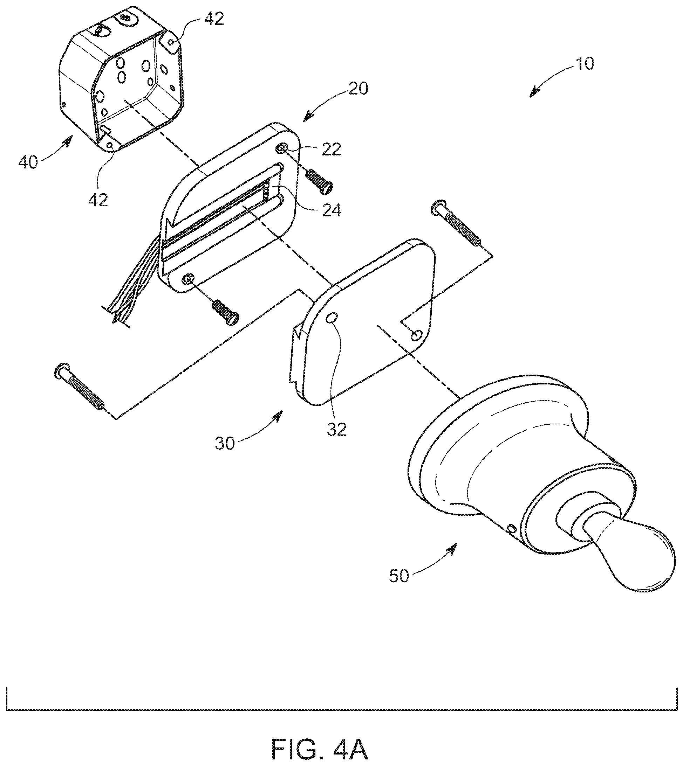

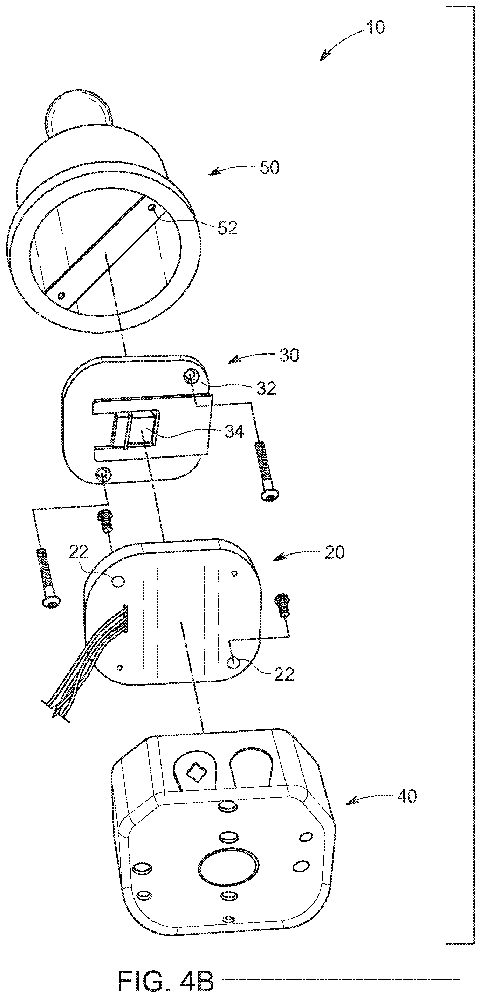

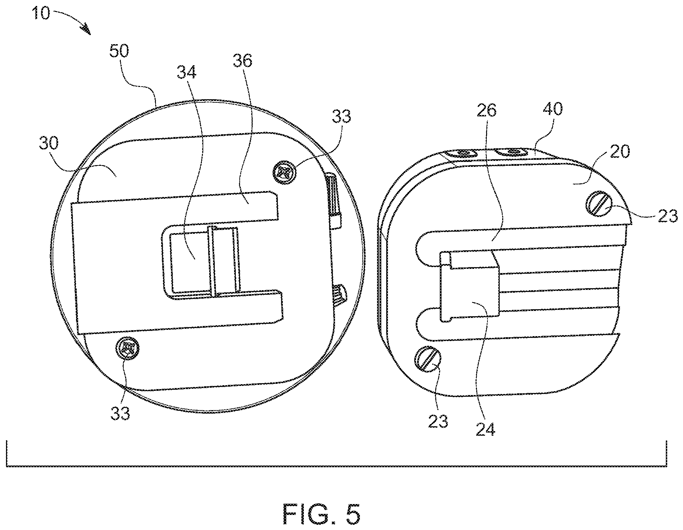

The first mounting plate 20 has a plurality of bore holes 22 at opposing corners thereof that line up with and correspond to threaded bores 42 located in opposing corners of a standard ceiling electrical junction box 40. Bolts or screws 23 are inserted through holes 22 and engage the threads of the threaded bore holes 42 to secure the first mounting plate 20 to the ceiling junction box 40. Similarly, the second mounting plate 30 has a plurality of bore holes 32 at opposing corners thereof that line up with and correspond to threaded bores 52 located in opposing corners of a standard electrical fixture 50 such as the light fixture shown in FIG. 4A, FIG. 4B and FIG. 5. Bolts or screws 33 are inserted through holes 32 and engage the threads of the threaded bore holes 52 to secure the second mounting plate 30 to the fixture 50.

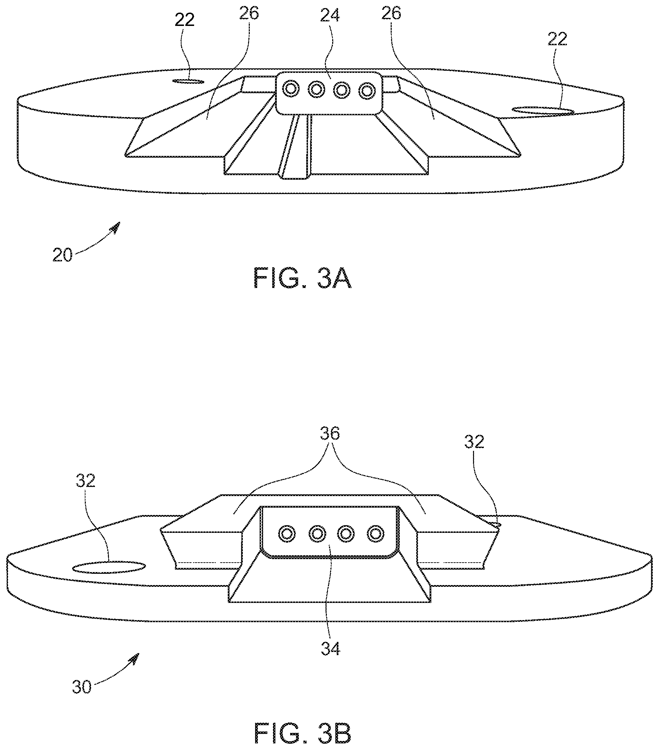

A first electrical connector 24 is positioned in a channel 26 in the face of the first mounting plate 20. Electrical wires 28 have first ends connected to the first electrical connector 24 and second ends that pass through an opening in the first mounting plate 20 and travel to the interior of the junction box 40 where they are electrically coupled to the power supply in a conventional manner. As best shown in FIG. 3A, the side walls of the channel 26 are angled inwardly to receive the outwardly sloping walls of the mating projection 36 on the second mounting plate 30 (FIG. 3B). The second mounting plate 30 also includes a second electrical connector 34. Electrical wires 38 have first ends connected to the second electrical connector 34 and second ends that pass through an opening in the second mounting plate 30 for electrical coupling to the terminals of the fixture 50. As shown in FIG. 3A and FIG. 3B, the first electrical connector 24 is a female connector and the second electrical connector 34 is a male connector with male contacts configured to engage the female contacts of the first electrical connector 24 when the first mounting plate 20 and second mounting plate 30 are fully engaged.

In operation, the mounting plates 20, 30 are first attached to the junction box 40, and fixture 50, respectively. The wires 28 of the first mounting plate 20 are connected to the power source wires inside the ceiling junction box 40. The first mounting plate 20 is then attached to the junction box 40 by bolts or screws 23 that pass through the openings 22 in the first mounting plate 20 and threadably engage the threaded openings 42 in the junction box 40. The wires 38 of the second mounting plate 30 are connected to the terminals on the fixture 50. The second mounting plate 30 is then attached to the fixture 50 by bolts or screws 33 that pass through the openings 32 in the second mounting plate 30 and threadably engage the threaded openings 52 in the fixture 50.

Once both of the mounting plates 20, 30 are secured, the open end of the channel 26 of the first mounting plate 20 is lined up with the free end of the mating projection 36 of the second mounting plate 30. The second mounting plate 30 and the fixture 50 that is affixed thereto are then slid along the axis of the channel 26 until the electrical contacts of the first electrical connector 24 fully engage the electrical contacts of the second electrical connector 34. When this occurs, the first mounting plate 20 should be substantially in alignment with the second mounting plate 30. The fixture 50 may be removed by sliding the fixture 50 and associated second mounting plate 30 in the opposite direction until the walls of the projection 36 are clear of the walls of the channel 26.

## Claims

1. A quick-connect mounting device for mounting an electrical fixture (50) to a junction box (40) comprising:
a first junction box mounting plate (20) having junction box mounting means for removably affixing said first junction box mounting plate (20) to said junction box (40), and a first electrical connector (24) positioned in a channel (26) in a mating face of said first junction box mounting plate (20); and
a second electrical fixture mounting plate (30) having electrical fixture mounting means for removably affixing said second electrical fixture mounting plate (30) to said electrical fixture (50), and a second electrical connector (34) positioned in a slot in a projection extending upwardly from a mating face of the second electrical fixture mounting plate (30);
said channel (26) in the mating face of the first junction box mounting plate (20) being sized to slidably receive the projection extending from the face of the second electrical fixture mounting plate (30), and said first electrical connector (24) being configured to mate with said second electrical connector (34); and **characterized in that**
side walls of the channel (26) in the mating face of the first junction box mounting plate (20) are angled inwardly to receive outwardly sloping walls of the projection on the second electrical fixture mounting plate (30).

2. The quick-connect mounting device according to claim 1 wherein said means for removably affixing said first junction box mounting plate (20) to said junction box (40) comprises a plurality of bore holes (22) located at opposing corners of the junction box mounting plate (20) and a plurality of bolts (23) inserted through said bore holes (22) and threadably engaging threaded bore holes (42) in the junction box (40).

3. The quick connect mounting device according to claim 2 where said means
for removably affixing said second electrical fixture mounting plate (30) to said electrical fixture (50) comprises a plurality of bore holes (32) located at opposing corners of the second electrical fixture mounting plate (30) and a plurality of bolts (33) inserted through said bore holes (32) and threadably engaging threaded bore holes (52) in the electrical fixture (50).

4. The quick-connect mounting device according to claim 1, further comprising a plurality of electrical wires passing through an opening in the first junction box mounting plate (20) and having first ends connected to said first electrical connector (24) and second ends coupled to power supply wires within the junction box (40).

5. The quick-connect mounting device according to claim 4, further comprising a plurality of electrical wires passing through an opening in the second electrical fixture mounting plate (30) and having first ends connected to said second electrical connector (34) and second ends coupled to electrical terminals of the electrical fixture (50).

6. The quick-connect mounting device according to claim 1, wherein the first electrical connector (24) is a female connector and the second electrical connector (34) is a male connector with male contacts configured to engage female contacts of the first electrical connector (24) when the first junction box mounting plate (20) and second electrical fixture mounting plate (30) are fully engaged.

7. The quick-connect mounting device according to claim 1 wherein the junction box (40) is mounted in a ceiling of a structure.

## Patentansprüche

1. Schnellverbindungsmontagevorrichtung zum Montieren eines elektrischen Ausstattungsteils (50) an einem Abzweigkasten (40), umfassend:
eine erste Montageplatte (20) des Abzweigkastens, die ein Montagemittel des Abzweigkastens zum lösbaren Anbringen der ersten Montageplatte (20) des Abzweigkastens an dem Abzweigkasten (40) und einen ersten elektrischen Verbinder (24), der in einem Kanal (26) in einer Passfläche der ersten Montageplatte (20) des Abzweigkastens positioniert ist, aufweist; und
eine zweite Montageplatte (30) des elektrischen Ausstattungsteils, die ein Montagemittel des elektrischen Ausstattungsteils zum lösbaren Anbringen der zweiten Montageplatte (30) des elektrischen Ausstattungsteils an dem elektrischen Ausstattungsteil (50) und einen zweiten elektrischen Verbinder (34), der in einem Schlitz in einem Vorsprung positioniert ist, der sich von einer Passfläche der zweiten Montageplatte (30) des elektrischen Ausstattungsteils nach oben erstreckt, aufweist;
wobei der Kanal (26) in der Passfläche der ersten Montageplatte (20) des Abzweigkastens bemessen ist, um den Vorsprung, der sich von der Fläche der zweiten Montageplatte (30) des elektrischen Ausstattungsteils erstreckt, gleitend aufzunehmen, und der erste elektrische Verbinder (24) konfiguriert ist, um mit dem zweiten elektrischen Verbinder (34) zusammenzupassen; und **dadurch gekennzeichnet, dass**
Seitenwände des Kanals (26) in der Passfläche der ersten Montageplatte (20) des Abzweigkastens nach innen abgewinkelt sind, um nach außen geneigte Wände des Vorsprungs an der zweiten Montageplatte (30) des elektrischen Ausstattungsteils aufzunehmen.

2. Schnellverbindungsmontagevorrichtung nach Anspruch 1, wobei das Mittel zum lösbaren Anbringen der ersten Montageplatte (20) des Abzweigkastens an dem Abzweigkasten (40) eine Vielzahl von Bohrlöchern (22), die sich an gegenüberliegenden Ecken der Montageplatte (20) des Abzweigkastens befinden, und eine Vielzahl von Schrauben (23), die durch die Bohrlöcher (22) eingeführt sind und mit Gewindebohrlöchern (42) in dem Abzweigkasten (40) schraubbar in Eingriff stehen, umfasst.

3. Schnellverbindungsmontagevorrichtung nach Anspruch 2, wobei das Mittel zum lösbaren Anbringen der zweiten Montageplatte (30) des elektrischen Ausstattungsteils an dem elektrischen Ausstattungsteil (50) eine Vielzahl von Bohrlöchern (32), die sich an gegenüberliegenden Ecken der zweiten Montageplatte (30) des elektrischen Ausstattungsteils befinden, und eine Vielzahl von Schrauben (33), die durch die Bohrlöcher (32) eingeführt sind und mit Gewindebohrlöchern (52) in dem Ausstattungsteil (50) schraubbar in Eingriff stehen, umfasst.

4. Schnellverbindungsmontagevorrichtung nach Anspruch 1, ferner umfassend eine Vielzahl von elektrischen Drähten, die durch eine Öffnung in der ersten Montageplatte (20) des Abzweigkastens verlaufen und erste Enden, die mit dem ersten elektrischen Verbinder (24) verbunden sind, und zweite Enden, die mit Leistungsversorgungsdrähten innerhalb des Abzweigkastens (40) gekoppelt sind, aufweisen.

5. Schnellverbindungsmontagevorrichtung nach Anspruch 4, ferner umfassend eine Vielzahl von elektrischen Drähten, die durch eine Öffnung in der zweiten Montageplatte (30) des elektrischen Ausstattungsteils verlaufen und erste Enden, die mit dem zweiten elektrischen Verbinder (34) verbunden sind, und zweite Enden, die mit elektrischen Anschlüssen des elektrischen Ausstattungsteils (50) gekoppelt sind, aufweisen.

6. Schnellverbindungsmontagevorrichtung nach Anspruch 1, wobei der erste elektrische Verbinder (24) eine Buchse ist und der zweite elektrische Verbinder (34) ein Stecker mit Kontaktstiften ist, die konfiguriert sind, um mit Kontaktbuchsen des ersten elektrischen Verbinders (24) in Eingriff zu stehen, wenn die erste Montageplatte (20) des Abzweigkastens und die zweite Montageplatte (30) des elektrischen Ausstattungsteils vollständig in Eingriff stehen.

7. Schnellverbindungsmontagevorrichtung nach Anspruch 1, wobei der Abzweigkasten (40) in einer Decke einer Struktur montiert ist.

## Revendications

1. Dispositif de montage à connexion rapide destiné au montage d'un appareil électrique (50) à une boîte de jonction (40) comprenant :
une première plaque de montage de boîte de jonction (20) ayant un moyen de montage de boîte de jonction permettant de fixer de manière amovible ladite première plaque de montage de boîte de jonction (20) à ladite boîte de jonction (40), et un premier connecteur électrique (24) positionné dans un canal (26) dans une face d'appariement de ladite première plaque de montage de boîte de jonction (20) ; et
une seconde plaque de montage d'appareil électrique (30) ayant un moyen de montage d'appareil électrique permettant de fixer de manière amovible ladite seconde plaque de montage d'appareil électrique (30) audit appareil électrique (50), et un second connecteur électrique (34) positionné dans une encoche dans une projection s'étendant vers le haut à partir d'une face d'appariement de la seconde plaque de montage d'appareil électrique (30) ;
ledit canal (26) dans la face d'appariement de la première plaque de montage de boîte de jonction (20) étant dimensionné pour recevoir de manière coulissante la projection s'étendant à partir de la face de la seconde plaque de montage d'appareil électrique (30), et ledit premier connecteur électrique (24) étant configuré pour s'apparier avec ledit second connecteur électrique (34) ; et **caractérisé en ce que**
des parois latérales du canal (26) dans la face d'appariement de la première plaque de montage de boîte de jonction (20) forment un angle vers l'intérieur pour recevoir des parois s'inclinant vers l'extérieur, de la projection sur la seconde plaque de montage d'appareil électrique (30).

2. Dispositif de montage à connexion rapide selon la revendication 1 dans lequel ledit moyen permettant de fixer de manière amovible ladite première plaque de montage de boîte de jonction (20) à ladite boîte de jonction (40) comprend une pluralité d'alésages (22) localisés au niveau de coins opposés de la plaque de montage de boîte de jonction (20) et une pluralité de boulons (23) insérés à travers lesdits alésages (22) et s'engageant par filetage avec des alésages filetés (42) dans la boîte de jonction (40).

3. Dispositif de montage à connexion rapide selon la revendication 2 où ledit moyen permettant de fixer de manière amovible ladite seconde plaque de montage d'appareil électrique (30) audit appareil électrique (50) comprend une pluralité d'alésages (32) localisés au niveau de coins opposés de la seconde plaque de montage d'appareil électrique (30) et une pluralité de boulons (33) insérés à travers lesdits alésages (32) et s'engageant par filetage avec des alésages filetés (52) dans l'appareil électrique (50).

4. Dispositif de montage à connexion rapide selon la revendication 1, comprenant en outre une pluralité de fils électriques passant à travers une ouverture dans la première plaque de montage de boîte de jonction (20) et ayant des premières extrémités connectées audit premier connecteur électrique (24) et des secondes extrémités couplées à des fils d'alimentation en puissance au sein de la boîte de jonction (40).

5. Dispositif de montage à connexion rapide selon la revendication 4, comprenant en outre une pluralité de fils électriques passant à travers une ouverture dans la seconde plaque de montage d'appareil électrique (30) et ayant des premières extrémités connectées audit second connecteur électrique (34) et des secondes extrémités couplées à des bornes électriques de l'appareil électrique (50).

6. Dispositif de montage à connexion rapide selon la revendication 1, dans lequel le premier connecteur électrique (24) est un connecteur femelle et le second connecteur électrique (34) est un connecteur mâle avec des contacts mâles conçus pour s'engager avec des contacts femelles du premier connecteur électrique (24) lorsque la première plaque de montage de boîte de jonction (20) et la seconde plaque de montage d'appareil électrique (30) sont complètement engagées.

7. Dispositif de montage à connexion rapide selon la revendication 1 dans lequel la boîte de jonction (40) est montée dans un plafond d'une structure.
